(19) Europäisches Patentamt
European Patent Office
Office européen des brevets

(11) **EP 2 025 722 A1**

(12) **EUROPÄISCHE PATENTANMELDUNG**

(43) Veröffentlichungstag:
**18.02.2009 Patentblatt 2009/08**

(51) Int Cl.:
***C09C 1/36*** *(2006.01)*     ***C09C 1/30*** *(2006.01)*

(21) Anmeldenummer: **07014926.5**

(22) Anmeldetag: **30.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Nanoresins AG**
**21502 Geesthacht (DE)**

(72) Erfinder:
• **Kühner, Uwe Dietrich, Dr.**
**20457 Hamburg (DE)**

• **Graalmann, Onno, Dr.**
**21502 Geesthacht (DE)**
• **Wieczorreck, Robert**
**22885 Barsbüttel (DE)**
• **Roscher, Christof, Dr.**
**45133 Essen (DE)**

(74) Vertreter: **Keussen, Christof**
**Glawe - Delfs - Moll**
**Patent- und Rechtsanwälte**
**Rothenbaumchaussee 58**
**20148 Hamburg (DE)**

(54) **Verfahren zur Herstellung eines nanoskaligen Siliciumdioxids**

(57) Gegenstand der Erfindung ist ein Verfahren zur Herstellung eines nanoskaligen Siliciumdioxids. Es weist folgende Schritte auf:

a) zur Verfügung stellen einer wässrigen Suspension eines kolloidalen Siliciumdioxids mit einer mittleren Teilchengröße von 1 bis 500 nm;

b) Reagierenlassen mit einem Organosilan oder Organosiloxan in einem aprotischen cyclischen Ether und Silanisierung des kolloidalen Siliciumdioxids;

c) Abtrennung der wässrigen Phase der Reaktionsmischung von der organischen Phase;

d) nochmaliges Reagierenlassen der organischen Phase mit einem Organosilan oder Organosiloxan in einem aprotischen cyclischen Ether und Silanisierung des kolloidalen Siliciumdioxids;

e) Abtrennung der wässrigen Phase der Reaktionsmischung von der organischen Phase.

Figur 1

EP 2 025 722 A1

**Beschreibung**

Die Erfindung betrifft ein Verfahren zur Herstellung eines nanoskaligen Siliciumdioxids.

Es ist bekannt, polymere Werkstoffe wie z.B. Polyurethane, Polyharnstoffe oder sogenannte Reaktionsharze mit Füllstoffen zu versehen, um bestimmte Eigenschaften des polymeren Werkstoffes zu modifizieren. Bspw. können auf diese Weise Schlagzähigkeit, Biegefestigkeit, Härte oder elektrisches Isolationsvermögen verbessert werden.

Es ist bereits bekannt, Kieselsäure bzw. Siliciumdioxid ($SiO_2$) als Füllstoff in Polymeren zu verwenden. Verschiedene Verfahren zur Herstellung von $SiO_2$-Füllstoffen sind aus offenkundiger Vorbenutzung bekannt.

Natürliches (mineralisches) $SiO_2$ kann bspw. durch Mahlen auf eine gewünschte Teilchengröße gebracht werden und mit dem Polymer oder einem Polymervorprodukt vermischt werden. Gemahlenes $SiO_2$ zeigt in der Regel eine sehr breite Teilchengrößeverteilung und unregelmäßige Teilchenstruktur. Teilchengrößen von unter 1 $\mu$m sind durch mechanische Zerkleinerung des $SiO_2$ nicht oder nur schwer erzielbar.

Es ist ferner bekannt, aus wässrigen Alkalisilicatlösungen $SiO_2$ durch Ansäuern auszufällen und anschließend zu trocknen. Dieses gefällte $SiO_2$ wird mit dem Polymer oder einem Vorprodukt vermischt. Auch hier erhält man unregelmäßige Teilchenstrukturen mit sehr breiten Teilchengrößeverteilungen.

Eine weitere Möglichkeit ist die Herstellung pyrogener Kieselsäure durch Flammenhydrolyse von Siliciumhalogenverbindungen. Dabei entstehen Teilchen sehr komplexer Morphologie und extrem breiter Teilchengrößeverteilung, da sich die bei der Flammenhydrolyse entstehenden Primärteilchen teilweise agglomerieren und andere assoziierte Überstrukturen bilden. Pyrogene Kieselsäure ist zudem teuer in der Herstellung.

Weiterhin bekannt ist es, organofunktionelle Silane (insbesondere Alkoxysilane) zu hydrolysieren und kondensieren, dadurch wässrige oder wässrig-alkoholische Kieselsäuresole herzustellen und diese Sole mit einem Polymervorprodukt zu vermischen. Anschließend kann Wasser bzw. Alkohol aus der Mischung entfernt werden. Dieses Verfahren ist teuer und im großtechnischen Maßstab nur schwer kontrollierbar.

Die geschilderten Verfahren haben ferner den Nachteil, dass die gezielte Herstellung von $SiO_2$-Füllstoffen mit monomodaler, enger Teilchengrößeverteilung nicht möglich ist, dieser Nachteil ist bei den drei erstgenannten Verfahren besonders ausgeprägt. Dies führt dazu, dass Dispersionen des Füllstoffes in Polymervorprodukten bereits bei verhältnismäßig niedrigen Füllstoffkonzentrationen unerwünschte rheologische Eigenschaften, insbesondere eine hohe Viskosität, zeigen, die die Verarbeitbarkeit erschweren.

EP A 0 982 268 offenbart ein Verfahren zur Herstellung kolloidaler Kieselsäure, bei dem eine wässrige Suspension eines kolloidalen $SiO_2$ silanisiert wird.

Der Erfindung liegt die Aufgabe zugrunde, ein Verfahren der eingangs genannten Art zu schaffen, das ein vielseitig verwendbares hydrophobes, monodisperses, nanoskaliges Siliciumdioxid zur Verfügung stellt.

Das erfindungsgemäße Verfahren weist folgende Schritte auf:

a) zur Verfügung stellen einer wässrigen Suspension eines kolloidalen Siliciumdioxids mit einer mittleren Teilchengröße von 1 bis 500 nm;

b) Reagierenlassen mit einem Organosilan oder Organosiloxan in einem aprotischen cyclischen Ether und Silanisierung des kolloidalen Siliciumdioxids;

c) Abtrennung der wässrigen Phase der Reaktionsmischung von der organischen Phase;

d) nochmaliges Reagierenlassen der organischen Phase mit einem Organosilan oder Organosiloxan in einem aprotischen cyclischen Ether und Silanisierung des kolloidalen Siliciumdioxids;

e) Abtrennung der wässrigen Phase der Reaktionsmischung von der organischen Phase.

Das erfindungsgemäße Verfahren geht von einem nanoskaligen, kolloidalen Kieselsäuresol aus. Der ph-Wert dieses Sols wird bevorzugt auf 5 oder weniger, weiter bevorzugt auf 4 oder weniger eingestellt. Bei einem basischen Sol kann dies durch Zugabe von Säure oder durch Verwendung eines sauren Kationenaustauschers geschehen.

Im nächsten Schritt wird ein Organosilan oder Organosiloxan in einem aprotischen cyclischen Ether (bspw. Dioxan, besonders bevorzugt THF) zugegeben und unter Rühren vermischt. Es findet eine Silanisierung statt, bei der vorzugsweise intensiv gerührt wird. Nach etwa einer Stunde ist die Reaktion abgeschlossen und es hat eine Phasentrennung stattgefunden. Die organische Phase enthält das Lösungsmittel (THF), das silanisierte kolloidale $SiO_2$ und geringe Mengen Wasser. Die wässrige Phase wird abgetrennt und verworfen. Der Begriff wässrige Phase bezeichnet im Rahmen der Erfindung diejenige Phase mit dem polararen Lösungsmittel. Sie enthält bevorzugt im Wesentlichen Wasser, kann aber auch mit Wasser mischbare oder darin lösliche (bevorzugt polare) organische Lösungsmittel enthalten. Der Begriff organische Phase bezeichnet die weniger polare Phase.

In einem nächsten Schritt wird ein zweites Mal silanisiert durch nochmalige Zugabe eines Organosilans oder Organosiloxans. Die Reaktion wird wieder durchgeführt, bis sich zwei Phasen bilden. Die obere Phase enthält den größten Teil des Restwassers, die Unterphase das silanisierte kolloidale $SiO_2$.

Das in Schritt a) eingesetzte kolloidale $SiO_2$ weist bevorzugt eine mittlere Teilchengröße von 2 bis 300 nm, weiter vorzugsweise 3 bis 200 nm, weiter vorzugsweise 4 bis 150 nm, weiter vorzugsweise 4 bis 80 nm, weiter vorzugsweise 10 bis 40 nm auf.

Das erfindungsgemäß hergestellte nanoskalige Siliciumdioxid ist bevorzugt hydrophob bzw. durch die Silanisierung der Oberfläche hydrophobiert. Es kann daher besonders gut in eine unpolare und damit hydrophobe Matrix wie bspw. eine Polymermatrix eingearbeitet werden.

Das erfindungsgemäße nanoskalige Siliziumdioxid besteht vorzugsweise zu wenigstens 50 % aus vereinzelten, nicht aggregierten oder agglomerierten Primärpartikeln. Diese Vereinzelung bleibt bevorzugt erhalten, wenn die Partikel entweder aus dem Lösungsmittel heraus oder aber nach Entfernen des Lösungsmittels als redispergierbares Pulver in eine Polymermatrix eingearbeitet werden. Weitere bevorzugte Untergrenzen sind 70 %, 80 %, 90 %, 95 % und 98 %. Bei diesen Prozentangaben handelt es sich um Gew.-%. Gemäß diesem Aspekt der Erfindung ist es somit möglich, eine Dispersion bzw. ein redispergierbares Pulver zur Verfügung zu stellen, das im Wesentlichen frei ist von Aggregaten und/oder Agglomeraten der Siliciumdioxidpartikel. Dies verbessert die Verarbeitbarkeit (geringere Viskosität) und die mechanischen Eigenschaften von mit den erfindungsgemäß hergestellten Siliciumdioxidpartikeln hergestellten Zwischen- und Endprodukten.

Die Organosilane oder Organosiloxane sind bevorzugt ausgewählt aus der Gruppe bestehend aus Organosilanen der Formel $R^1_a H_b SiX_{4-a-b}$ und Organosiloxanen der Formel $R^1_n SiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen, jedes X unabhängig voneinander ausgewählt ist aus einem Halogenatom oder Alkoxyresten mit 1 bis 18 Kohlenstoffatomen, a = 0, 1, 2 oder 3, b = 0 oder 1, a+b = 1, 2 oder 3, unter der Voraussetzung, dass, wenn b = 1, dann a+b = 2 oder 3 und n eine ganze Zahl von 2 bis einschließlich 3 ist.

Besonders bevorzugt wird ein Halogensilan, weiter vorzugsweise ein Chlorsilan verwendet. Die Silane können funktionalisiert sein, beispielsweise mit polymerisierbaren Gruppen, insbesondere Vinylgruppen. Im Rahmen der Erfindung ist es möglich, die beiden Silanisierungsschritte mit unterschiedlichen Silanen durchzuführen. Beispielsweise kann lediglich in einem der beiden Silanisierungsschritte ein funktionalisiertes Silan, bevorzugt ein Vinylsilan, eingesetzt werden. Ebenfalls ist es möglich, Mischungen funktionalisierter und nicht funktionalisierter Silane in einem Silanisierungsschritt einzusetzen.

Im Rahmen der Erfindung ist es bevorzugt, dass bei Einsatz funktionalisierter Silane diese ganz oder überwiegend im zweiten Silanisierungsschritt eingesetzt werden. Es hat sich gezeigt, dass dann eine höhere Funktionalisierung der Partikeloberfläche erreicht wird.

Die Silanisierung in den Schritten b) und d) des Anspruchs 1 wird bevorzugt bei 0 bis 65°C weiter vorzugsweise 10 bis 65°C durchgeführt. Der erste Silanisierungsschritt kann bei einer Variante der Erfindung bei niedrigeren Temperaturen (vorzugsweise 0 bis 20°C, weiter vorzugsweise 0 bis 10°C) durchgeführt werden als der zweite Schritt, der beispielsweise bei 20 bis 65°C durchgeführt werden kann.

Im Rahmen der Erfindung ist es möglich, bereits vor Durchführung des ersten Silanisierungsschrittes (Schritt b) des Anspruchs 1) zusätzlich eine Silanisierung durchzuführen, indem der wässrigen Suspension bereits ein Alkoxysilan zugegeben wird.

Nach Durchführung der zweiten Silanisierung wird bevorzugt der cyclische Ether gegen ein anderes aprotisches organisches Lösungsmittel ausgetauscht, bevorzugt Toluol. Zu diesem Zweck kann der cyclische Ether destillativ abgezogen werden. Dies geschieht vorzugsweise unter Zugabe des zweiten Lösungsmittels (bspw. Xylol, Butylacetat, Methylisobutylketon, oder Toluol) als Schleppmittel. Bevorzugt ist es, wenn nach dem Abziehen des cyclischen Ethers unter Rückfluss weiter erhitzt wird, wobei bevorzugt das rückfließende Lösungsmittel mit einer Base neutralisiert wird. Zur Neutralisation kann ein basisches Salz wie beispielsweise ein Alkali oder Erdalkalicarbonat oder - Hydrogencarbonat verwendet werden. Das Lösungsmittel kann beispielsweise über eine mit dem basischen Salz gefüllte Säule geführt werden.

Erfindungsgemäß ist es möglich, aus der Suspension lösungsmittelfreie Pulver herzustellen. Zu diesem Zweck wird das Lösungsmittel bei erhöhter Temperatur im Vakuum entfernt. Das so erhaltene Pulver ist durch einfaches Rühren monodispers in einer Vielzahl von Lösungsmitteln, Monomeren und Polymeren redispergierbar. Die Teilchengröße bleibt konstant, eine Agglomeration oder Aggregation findet nicht oder allenfalls in unwesentlichem Masse statt.

Die erfindungsgemäß hergestellte Dispersion oder das aus der Dispersion durch Entfernen des Lösemittels gewonnene redispergierbare Pulver können in verschiedenste Basispolymere eingearbeitet werden und deren physikalische und insbesondere mechanische Eigenschaften verbessern bzw. verändern. Als Basispolymere können im Rahmen der Erfindung eine Vielzahl bekannter Polymere verwendet werden. Beispielsweise können mittels erfindungsgemäß hergestellter Siliciumdioxidpartikel thermoplastische oder duroplastische Kunststoffe modifiziert werden. Beispielhaft erwähnt seien Polyolefine, Polycarbonate, Polyamide, Polyimide, Polyacrylate, Polymethacrylate, Polyetherketone, Polysulfone, Polyurethane, Polyharnstoffe, Epoxidharze, Polyesterharze und Polysiloxane (Silikone). Modifizierbare Elastomere sind beispielsweise Naturkautschuk, Butylkautschuke, Acrylatkautschuke, Styrol-Butadien-Kautschuk (SBR), ggf. hydrierte Nitril-Butadien-Kautschuke etc. Bei vielen dieser Stoffgruppen ist es von besonderem Vorteil, die erfindungsgemäß herstellten Nanopartikel als redispergierbares Pulver einzuarbeiten, da ein Einbringen über Lösungsmittel nachteilig und mit hohem Aufwand verbunden ist.

Besonders vorteilhaft kann das erfindungsgemäß hergestellte nanoskalige Siliciumdioxid auch in Polymere bzw. Harze mit niedrigem Siedepunkt eingearbeitet werden, wie beispielsweise Methylmethacrylat (MMA).

Erfindungsgemäß hergestellte nanoskalige Partikel können ebenfalls zur Modifikation von Weichmachern wie beispielsweise Adipaten und Phthalaten verwendet werden. Sie bilden mit diesen Weichmachern niedrigviskose und stabile Dispersionen.

Mit den erfindungsgemäß herstellten Partikeln modifizierte polymere bzw. polymerisierbare Mischungen sind stabile und lagerfähige Dispersionen und weisen gute Fließeigenschaften (niedrige Viskosität, geringe Strukturviskosität) auf. Sie eignen sich daher beispielsweise für die Herstellung von Dentalformulierungen, die beispielsweise aus einem statischen Mischer appliziert werden und daher keine zu hohe Verarbeitungsviskosität aufweisen dürfen. Besonders bevorzugt können sie bei Dentalformulierungen auf Basis von Silikonen verwendet werden.

Ein anderes mögliches Anwendungsgebiet ist die Modifikation von LSRs (Liquid Silicone Rubber), die in der Regel im Spritzguss verarbeitet werden und bei denen deswegen eine niedrige Verarbeitungsviskosität von großem Vorteil ist. Erfindungsgemäß kann bei LSRs ein hoher Füllstoffgehalt und damit gute mechanische Eigenschaften des ausgehärteten Endprodukts erreicht werden, ohne dass die Verarbeitbarkeit durch eine zu hohe Viskosität darunter leidet.

Grundsätzlich ermöglicht es die Erfindung, polymerisierbare Mischungen bereitzustellen, die aufgrund ihrer niedrigen Viskosität gut verarbeitbar sind und als ausgehärtetes Polymer durch einen hohen Füllstoffgehalt bewirkte verbesserte Eigenschaften aufweisen, insbesondere mechanische Eigenschaften, verbesserte thermische Leitfähigkeit und dergleichen.

Gemäß einer Ausführungsform der Erfindung weist das im zweiten Silanisierungsschritt verwendete Silan oder Siloxan freie SiH-Gruppen auf, so dass nach diesem zweiten Silanisierungsschritt freie SiH-Gruppen auf der Oberfläche der Siliziumdioxidpartikel vorhanden sind. SiH-Gruppen sind sehr hydrolyseempfindlich. Im Rahmen der Erfindung macht bereits der erste Silanisierungsschritt die Oberfläche der $SiO_2$-Partikel weitgehend wasserfrei, so dass im zweiten Silianisierungsschritt SiH-Gruppen auf die Oberfläche aufgebracht werden können, die hinreichend stabil sind und nicht sofort durch Restfeuchtigkeit hydrolisiert werden.

Gemäß einer weiteren Variante der Erfindung steht diese SiH-Gruppe dann für eine Hydrosilylierung zur Verfügung. Mittels dieser Hydrosilylierung an die Oberfläche der Siliciumdioxidpartikel gezielt organisch modifiziert werden, bspw. durch Hydrosilylierung mit einem Alken oder einer Alkylverbindung. Gegenstand der Erfindung sind somit auch nanoskalige Siliciumdioxidpartikel, die freie SiH-Gruppen auf der Oberfläche aufweisen (Verfahrensprodukt des Anspruchs 20). Sie erlauben gewissermaßen eine Baukastenchemie zum gezielten Anbringen gewünschter Moleküle mittels Hydrosilylierung.

Ausführungsbeispiele der Erfindung werden nachfolgend beschrieben. In den Zeichnungen zeigt

Fig. 1 in einer grafischen Darstellung den Funktionalisierungsgrad der $SiO_2$ Oberfläche in Abhängigkeit von der im zweiten Silanisierungsschritt eingesetzten Vinylsilanmenge;

Fig. 2 die Viskositätserhöhung eines mit einem erfindungsgemäßen nanoskaligen Siliciumdioxids modifizierten Harzes im Vergleich zu einem mit pyrogener Kieselsäure modifizierten Harz.

In den nachfolgenden Beispielen werden mit den erfindungsgemäßen Nanopartikeln Kunststoffkomposite hergestellt und deren Eigenschaften bestimmt. Dabei werden die nachfolgend beschriebenen Messverfahren verwendet.

### 1.1 Viskosität

Die Viskosität der nanogefüllten Harze wurde bei 25 °C auf einem Brookfield-Viskosimeter RVDV-II+ mit Spindel 42 gemessen.

### 1.2 Mechanische Eigenschaften

Die zugeigenschaften (Bruchdehnung, Zugfestigkeit, E-Modul (bei 100 % Dehnung)) wurden anhand von Prüfkörper analog DIN 53504 / ISO 37 (Form Die S2) auf einer Zugprüfmaschine der Fa. Zwick bestimmt. Die Shore-Härte wurde nach DIN 53505 bestimmt.

### 1.3 **Teilchengröße**

Die Teilchengröße wurde bei 10 % Feststoffgehalt in toluolischer Dispersion per dynamischer Lichtstreuung auf einem Dynamic Light Scattering Particle Size Analyzer LB-550 der Firma Horiba bestimmt. Als Teilchengröße wird der D50-Wert der Partikelgrößenverteilung angegeben. Ein Maß für die Breite der Verteilung ist die Spanne. Sie ist dimensionslos und errechnet sich aus (D90-D10)/D50.

### 1.4 **Bestimmung der Vinylgruppen**

Aus der zu untersuchenden Dispersion werden die flüchtigen Bestandteile bei 80 °C im Vakuum entfernt. An dem resultierenden Pulver wird die Messung durchgeführt.
Die zu untersuchende Probe wird auf einer Analysenwaage in einen 250 ml Erlenmeyer-kolben eingewogen und die Einwaage auf 0,0001 g genau notiert. Es werden 75 ml Toluol dazu gegeben und die Probe unter Rühren gelöst. Danach werden 20,0 ml Wijs-Lösung zupipettiert.
Der Kolben wird verschlossen und mind. 60 min im Dunkeln stehen gelassen.
Nach Ablauf der Zeit werden 16 ml 10 %ige KI-Lösung und 60 ml dest. Wasser in dieser Reihenfolge zugegeben. Das zweiphasige, bräunlich-rote Gemisch wird mit 0,1 molarer Natriumthiosulfatlösung titriert. Dabei muss intensiv gerührt werden, damit beide Phasen gut vermengt werden. Es wird solange Natriumthiosulfatlösung zugegeben, bis die wässrige Phase hell orange bis gelb ist. Dann wird etwa 1 ml 1 %ige Stärkelösung zugesetzt, wodurch eine intensive Blau- bis Schwarzfärbung auftritt. Es wird bis zum Farbumschlag nach milchig-weiß weiter titriert. Nach dem Umschlag wird noch etwa 2 min weiter gerührt, um sicher zu gehen, dass die Rotfärbung nicht wieder auftritt. Der Verbrauch wird notiert. Werden beim Blindversuch weniger als 37 ml Natriumthiosulfatlösung verbraucht, muss der gesamte Versuch wiederholt werden. Auch der Halogenüberschuss muss berechnet werden. Ist der Wert kleiner als 120%, muss der Versuch mit weniger Einwaage wiederholt werden.

Berechnung des Vinylgehalts:

$$\text{Vinylgehalt } V = \frac{(b-a)*0,05}{E}$$

V: Vinylgehalt in mmol/g
a: Verbrauch an 0,1 m $Na_2S_2O_3$-Lösung in ml bei Versuch
b: Verbrauch an 0,1 m $Na_2S_2O_3$-Lösung in ml bei Blindwert
E: Einwaage Feststoff in g

Berechnung des Halogenüberschusses:

$$\text{Halogenüberschuss } X = \frac{a*100}{(b-a)}$$

X: Halogenüberschuss
a: Verbrauch an 0,1 m $Na_2S_2O_3$-Lösung in ml bei Versuch
b: Verbrauch an 0,1 m $Na_2S_2O_3$-Lösung in ml bei Blindwert

### 1.5 **Gasvolumetrische Bestimmung der SiH-Gruppen**

Aus der zu untersuchenden Dispersion werden die flüchtigen Bestandteile bei 80 °C im Vakuum entfernt. An dem resultierenden Pulver wird die Messung durchgeführt.
Es werden Doppelbestimmungen ohne Blindversuch durchgeführt.
Die Einwaage ist nach folgender Formel zu berechnen:

$$E = \frac{1,5}{c_{SiH}}$$

E:        benötigte Einwaage in g

$C_{SiH}$:    erwarteter SiH-Gehalt

Die berechnete Menge wird auf einer Analysenwaage in einen zweihalskolben eingewogen und die Einwaage auf 0,0001 g genau notiert. Es werden 20 ml Butanol mit

Hilfe eines Messzylinders und ein Magnetrührstäbchen zugegeben.

In einen mit Muffe und Klemme befestigten Tropftrichter mit Druckausgleich werden 15 ml Kalium-(t-butylat)-Lösung in Butanol eingefüllt. Zum gasdichten

Verschluss werden alle Schliffe gefettet. Auf den Tropftrichter wird ein geöffneter Schliffhahn aufgesetzt. Ein Zweihalskolben wird mit dem Tropftrichter und der Gasbürette verbunden, die mit Wasser gefüllt und mit einem Ausgleichskolben verbunden sein muss, der neben der Bürette höhenverstellbar befestigt wird.

Die Verbindungen zwischen Tropftrichter und Schliffhahn, Tropftrichter und Zweihalskolben sowie Zweihalskolben und Bürette werden mit Schliffklemmen gesichert. Die Apparatur wird senkrecht ausgerichtet und der Rührer angestellt. Die Bürette wird so in der Höhe verschoben, dass der Wasserpegel genau auf Null steht.

Jetzt wird die Apparatur verschlossen. Der Wasserstand wird noch mal kontrolliert und gegebenenfalls korrigiert. Dabei muss der obere Hahn zum Druckausgleich wieder geöffnet werden.

Durch Öffnen des Hahns am Tropftrichter fließt die Kalium-(t-butylat)-Lösung in den Zweihalskolben. Daraufhin setzt im Kolben die Gasentwicklung ein und der Wasserpegel in der Bürette wird durch das entstehende Wasserstoffgas nach unten gedrückt. Während der Gasentwicklung sollte das Ausgleichsgefäß dem nach unten wandernden Pegel entsprechend an der Stativstange verschoben werden, damit in der Apparatur kein Überdruck entsteht. Man notiert ca. alle 5 min die Veränderung des Wasserpegels, der Temperatur und des Luftdruck als Zwischenwerte. Zum genauen Ablesen muss der Pegel des Ausgleichsgefäßes mit dem der Bürette in eine Höhe gebracht werden. Wenn keine Veränderung mehr messbar ist, wartet man noch 5 min und notiert dann die drei Parameter als Endmesswerte.

Auswertung:

$$c_{SiH} = \frac{V * 273,15 * p}{22,41 * (T + 273,15) * 1000 * E}$$

$C_{SiH}$:    SiH-Gehalt in mmol/g

V:        Volumen des entstandenen Gases in ml

p:        Luftdruck in mbar

T:        Labortemperatur in °C

E:        Einwaage in g

**Eingesetzte Ausgangsmaterialinen**

Bei dem erfindungsgemäßen Verfahren wird eine wässrige Suspension eines kolloidalen Siliciumdioxids eingesetzt. Zur Herstellung dieser Suspension kommen bekannte Herstellungsverfahren in Frage.

Zum Beispiel können Partikel, die aus der Hydrolyse von Alkoxysilanen gewonnen wurden, in dem Verfahren eingesetzt werden. Insbesondere eignen sich Partikel, wie sie bei der Kondensation von angesäuertem Wasserglas entstehen. Die Verfahren dazu sind in der Literatur hinreichend beschrieben. Es sind eine Reihe von Produkten auf dem kommerziellen Markt erhältlich, wie z.B. Bindzil 40/130 und Bindzil 40/220 (Eka Chemicals) oder Levasil 200/40 % (H.C.Starck).

Kieselsole mit Partikelgrößen kleiner 100 nm sind häufig basisch stabilisiert. In der Regel ist der Stabilisator Ammoniak oder Natronlauge. Wenn nötig können diese z.B. mit einem Ionentauscher entfernt werden.

Beispiel 1

Herstellung einer Siliciumdioxiddispersion in Toluol

In einem Dreihalskolben wurden 63 g Chlortrimethylsilan in 1260 g THF vorgelegt und unter intensivem Rühren 1050 g Kieselsol (Levasil 200/40%, BET=200 m$^2$/g, 40% SiO$_2$, Na$^+$ mit Ionentauscher entfernt) über einen Tropftrichter zugetropft.

Innerhalb einer Stunde hatten sich zwei Phasen gebildet, die in einem Scheidetrichter getrennt wurden. Die Unterphase enthielt mehr als 99 % des Feststoffs, während die Oberphase einen Großteil des Wassers enthielt. Die Unterphase wurde mit 140 g THF verdünnt und unter Rühren 63 g Chlortrimethylsilan dazu gegeben. Nach einer Stunde Rühren wurde in einen Scheidetrichter überführt.

Innerhalb von einer Stunde hatten sich wiederum zwei Phasen gebildet, die getrennt abgelassen wurden. Die Oberphase bestand hauptsächlich aus Wasser und THF.

Die Unterphase wurde in einen Dreihalskolben überführt und mit 400 g Toluol verdünnt. Dann wurde unter Zugabe von weiterem Toluol ein Gemisch aus THF, Wasser und Toluol abdestilliert. Die Zugabe des Toluols erfolgte so, dass die Lösung nicht trocken fällt. Es wurde destilliert bis die Siedetemperatur von Toluol annähernd erreicht war.

Das so erhaltene, noch saure Toluol-Sol wurde unter Rückfluss erhitzt und das zurückströmende Destillat über eine mit Natriumcarbonat gefüllte Säule geleitet.

Nach 6 h Rückfluss reagierte das Sol nicht mehr sauer.

Beispiel 2

Herstellung einer Siliciumdioxidsuspension in THF.

Die Herstellung erfolgt wie in Beispiel 1, lediglich der Austausch des THF gegen Toluol unter Abziehen von THF wird weggelassen. Man erhält ein Sol mit einem Feststoffgehalt zwischen 45 und 55 Gew.-%. Zur Neutralisation wird das THF-Sol 6 h Stunden lang unter Rückfluss erhitzt, das rückfließende Lösungsmittel wird über einen basischen Ionenaustauscher (Amberjet 4400 OH von Rohm&Haas) geleitet.

Beispiel 3

Herstellung einer Vinyl-funktionalisierten Siliciumdioxiddispersion in Toluol.

Die Herstellung erfolgt wie in Beispiel 1 beschrieben. Jedoch wird in dem ersten und/oder zweiten Silanisierungsschritt Chlortrimethylsilan (TMSCl) ganz oder teilweise durch Chlordimethylvinysilan (DMVSCl) ersetzt.

Es werden insgesamt neun Versuche mit unterschiedlichen Verhältnissen der beiden Silane in der ersten und zweiten Silanisierung durchgeführt, Einzelheiten finden sich in Tabelle 1.

**Tabelle 1**

| | Anteil DMVSCl an der Silanmenge | | |
|---|---|---|---|
| Nr. | 1. Silanisierung | 2. Silanisierung | Vinylgehalt [mmol/g] |
| 3.1 | 100 % | 0 % | 0,178 |
| 3.2 | 0 % | 100 % | 0,279 |
| 3.3 | 0 % | 66 % | 0,162 |
| 3.4 | 0 % | 50 % | 0,120 |
| 3.5 | 0 % | 33 % | 0,079 |
| 3.6 | 0 % | 25 % | 0,057 |
| 3.7 | 0 % | 17 % | 0,034 |
| 3.8 | 0 % | 8 % | 0,018 |
| 3.9 | 0 % | 4 % | 0,011 |

Aus der Tabelle erkennt man, dass der Einsatz von Chlordimethylvinylsilan bei der zweiten Silanisierung zu einer höheren Vinylfunktionalisierung der Oberfläche führt als der Einsatz einer gleichen Menge Chlortrimethylvinylsilan in der ersten Silanisierung (Beispiele 3.1 und 3.2).

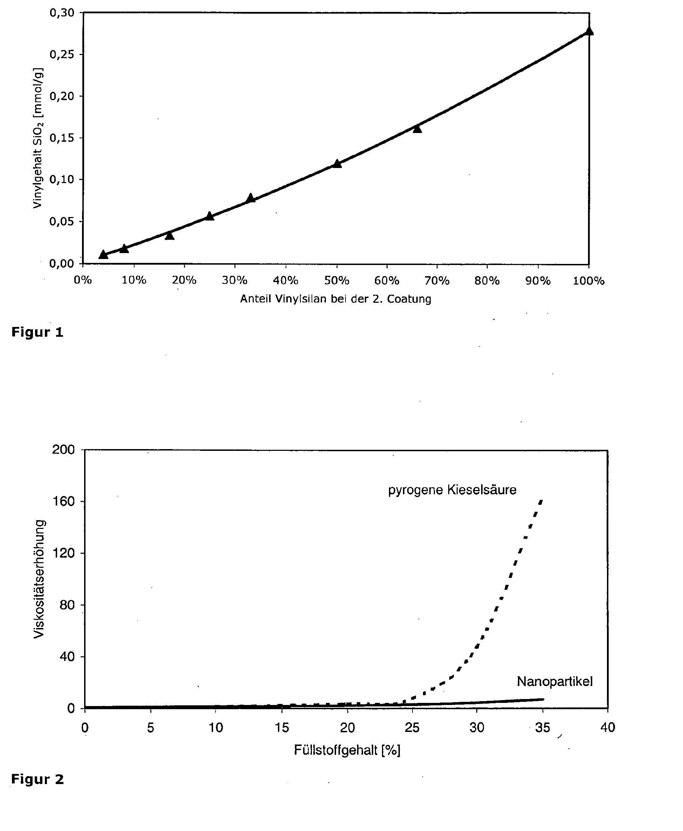

In Figur 1 ist in einer Grafik der Funktionalisierungsgrad der SiO$_2$ Oberfläche in Abhängigkeit von der eingesetzten Menge Chlordimethylvinylsilan im zweiten Silanisierungsschritt aufgetragen.

Beispiel 4

Aus den nanoskaligen Siliciumdioxiddispersionen werden nanogefüllte Harze hergestellt. Als Basispolymer für das Harz werden vinylterminierte Polydimethylsiloxane (Polymer VS, Firma hanse chemie AG) eingesetzt.

Zum Einbringen der Nanopartikel in das Basispolymer (Herstellung des Nanokomposits) wird ein Gewichtsteil des Basispolymers mit einem Gewichtsteil Toluol verdünnt. Die Dispersion der nanoskaligen Siliciumdioxidpartikel in dem Lösungsmittel wird unter intensivem Rühren zu dem Polymer gegeben. Anschließend wird auf 90°C erhitzt und Lösungsmittel werden im Vakuum abgezogen.

Die nanoskalige Siliciumdioxiddispersion des Beispiels 3.4 wurde in vier verschiedene Polymer VS-Varianten mit unterschiedlichen Basisviskositäten eingebracht.

Es wurden Komposite hergestellt, die zu 30 Gew.-% aus den Nanopartikeln und zu 70 Gew.-% aus dem Basispolymer (vinylterminiertes Polydimethylsiloxan) bestehen.

Tabelle 2 zeigt die Viskositäten der Basispolymere und die nach Einbringung der Nanopartikel gemessene Viskosität.

**Tabelle 2**

| Viskosität des Polymers [Pas] | Viskosität des Nanokomposites [Pas] | Viskositätserhöhung (Faktor) |
|---|---|---|
| 1 | 4,3 | 4,3 |
| 2 | 7 | 3,5 |
| 10 | 30 | 3,0 |
| 61 | 171 | 2,8 |

Die Tabelle zeigt, dass es selbst bei einem Füllgrad von 30% nur zu einer verhältnismäßig geringen Viskositätserhöhung der Polymere kommt, so dass diese gut verarbeitbar bleiben.

Zum Vergleich mit konventionellen Füllstoffen wurde Polymer VS 2.000 (Viskosität 2 Pas, hanse chemie AG) sowohl mit Nanopartikeln (Beispiel 3.4), als auch mit Aerosil R8200 (hydrophobierte niedrigviskose pyrogene Kieselsäure, Degussa AG) gemischt. Dabei zeigt sich ein erheblich größerer Viskositätsanstieg bei Verwendung der pyrogenen Kieselsäure als bei den Nanopartikeln (Figur 2). Bei 30 % Füllstoffanteil hat das Komposit auf Basis Aerosil R8200 eine 47 mal höhere Viskosität als das Basispolymer. Demgegenüber ist die Viskosität des Nanokomposits nur 3,5fach höher als die des Basispolymers.

Beispiel 5

Additionsvernetzende Polysiloxane (Silikonkautschuke) werden mit den erfindungsgemäßen Nanopartikeln hergestellt.

Als Basispolymer dient ein vinylterminiertes Polydimethylsiloxan mit einer Viskosität von 65 Pas (Polymer VS 65.000 der Firma hanse chemie AG). Weitere Rezepturbestandteile sind Polymer VS 1.000 (vinylterminiertes Polydimethylsiloxan mit einer Viskosität von 1 Pas), Catalyst 520 (Platinkatalysator, 2 % Platin in Methylvinylcyclosiloxan) und MVC (Methylvinylcyclosiloxan), alle von hanse chemie AG. Die Vulkanisation erfolgte im 2K-System mit Hilfe der Platinkatalysierten Hydrosilylierung. Dabei reagiert ein Polydimethylsiloxan mit SiH-Gruppen (Crosslinker 210, SiH-Gehalt ca. 4,35 mmol/g, Fa. hanse chemie AG) mit den Vinylgruppen des Polymer VS.

Die Bestandteile der A-Komponente wurden in einem Hauschild Speed Mixer DAC 150 FV entsprechend Tabelle 3 eingewogen und gemischt bis sie homogen waren. Dann wurden A- und B-Komponente im Massenverhältnis 100:4,54 gemischt und im Vakuum entgast. Nach dem Ausstreichen mit einem 2mm-Rakel wurden die Probekörper eine Stunde bei 80°C vulkanisiert.

**Tabelle 3**

| A-Komponente | | B-Komponente | |
|---|---|---|---|
| | Massenanteil | | Massenanteil |
| Polymer VS 1.000 | 19,8 % | Crosslinker 210 | 100 % |
| Polymer VS 65.000 mit 30 Gew.-% Nanopartikeln der Beispiele 3.2 bis 3.9 | 80,0 % | | |

(fortgesetzt)

| A-Komponente | | B-Komponente | |
|---|---|---|---|
| | Massenanteil | | Massenanteil |
| Catalyst 520 | 0,15 % | | |
| MVC | 0,05 % | | |

Wie aus der Tabelle 3 ersichtlich, wird bei den Versuchen ein Basispolymer VS 65.000 eingesetzt, das mit 30 Gew.-% Nanopartikeln der Beispiele 3.2 bis 3.9 versetzt ist. Die Herstellung erfolgt wie in Beispiel 4 angegeben.
Nach dem Abkühlen wurden die mechanischen Eigenschaften der erhaltenen Probekörper bestimmt. Diese sind in Tabelle 4 zusammengefasst.

**Tabelle 4**

| Partikel aus Beispiel | Vinylgehalt der Nanopartikel [mmol/g] | Zugfestigkeit [MPa] | Dehnung [%] | E-Modul [MPa] | Shore A |
|---|---|---|---|---|---|
| 3.2 | 0,279 | 2,75 | 230 | 1,06 | 41,0 |
| 3.3 | 0,162 | 2,52 | 236 | 0,99 | 39,5 |
| 3.4 | 0,120 | 2,80 | 265 | 1,00 | 37,0 |
| 3.5 | 0,075 | 2,58 | 281 | 0,85 | 34,0 |
| 3.6 | 0,057 | 2,34 | 270 | 0,79 | 30,5 |
| 3.7 | 0,034 | 2,29 | 305 | 0,65 | 30,5 |
| 3.8 | 0,018 | 1,91 | 316 | 0,45 | 25,5 |
| 3.9 | 0,011 | 1,78 | 334 | 0,32 | 24,0 |

Man erkennt aus Tabelle 4, dass die Vinylgruppen auf der Oberfläche der Partikel offensichtlich mit dem Vernetzer reagieren und für eine Anbindung des Füllstoffs an das Polymernetzwerk sorgen. Die Eigenschaften der Probekörper lassen sich über den Vinylgehalt auf der Oberfläche der Partikel gezielt beeinflussen.
Zugfestigkeit, E-Modul und Shore A-Härte steigen mit dem Gehalt von Vinylgruppen auf der $SiO_2$ Oberfläche.

Beispiel 6

Herstellung eines Nanopartikelpulvers

Die Nanopartikeldispersion in Toluol gemäß Beispiel 3.4 wurde bei 60°C im Vakuum am Rotationsverdampfer von flüchtigen Bestandteilen befreit. Das entstandene Granulat wurde in einer Reibschale zu feinem Pulver zerrieben und vier Stunden bei 60°C im Vakuum von flüchtigen Resten befreit. Man erhält ein fließendes weißes Pulver.
Das Pulver lässt sich schnell und ohne Agglomeration in verschiedenen Lösungsmitteln wieder lösen. Das Pulver wird zu diesem Zweck in einem Schraubdeckelglas vorgelegt und die neunfache Gewichtsmenge des entsprechenden Lösungsmittels zugegeben. Anschließend wird 15 min mit einem Magnetrührer gerührt. Das Pulver geht rückstandsfrei in Lösung.
Zur Überprüfung der Dispergierfähigkeit wurden die Teilchengrößen vor dem Trocknen und nach dem wieder Redispergieren in Lösungsmittel verglichen.

**Tabelle 5**

| Partikel | Ursprungssol | | in Toluol | | in BuAc | | in IPAc | |
|---|---|---|---|---|---|---|---|---|
| | D50 [nm] | Spanne | D50 [nm] | Spanne | D50 [nm] | Spanne | D50 [nm] | Spanne |
| Bespiel 3.4 | 29 | 0,7 | 33 | 1,0 | 25 | 0,7 | 28 | 0,7 |

Aufgrund der großen Oberfläche neigen die Partikel beim Entfernen des Lösungsmittels zu Agglomeratbildung.

Diese Agglomerate müssen beim Redispergieren wieder aufgebrochen werden. Je besser die Partikelgrößeverteilung mit der Partikelgrößeverteilung im Ursprungssol übereinstimmt, desto besser sind die Partikel redispergierbar.

Tabelle 5 zeigt, dass die Partikel in den Lösungsmitteln Toluol, Butylacetat und Isopropylacetat gut redispergierbar sind. In Toluol wird eine unwesentlich verbreiterte und zu größeren Teilchengrößen verschobene Partikelgrößenverteilung beobachtet. Diese Veränderungen liegen jedoch in einem Bereich, wie er auch bei Schwankungen von Charge zu Charge beobachtet wird. In Isopropyacetat wird eine identische Verteilung gemessen, in Butylacetat ist diese aufgrund von Lösungsmitteleffekten zu etwas kleineren Teilchengrößen verschoben.

Beispiel 7

Herstellung eines mit nanoskaligen Partikeln gefüllten Methacrylats 1050 g Kieselsol (Levasil 200/40%, BET=200 m$^2$/g, 40 % $SiO_2$, $Na^+$ mit Ionentauscher entfernt) wurden mit 62,58 g Gamma-Methacryloxypropyltrimethoxysilan für 1 h gerührt. Dann wurde mit 1250 g THF verdünnt und unter Rühren 63 g Chlortrimethylsilan dazu gegeben. Nach einer Stunde haben sich zwei Phasen gebildet. Die Oberphase enthielt keinen Feststoff und wurde verworfen. Die Unterphase wurde mit 150 g THF verdünnt, 63 g Chlortrimethylsilan unter Rühren dazu gegeben und nach einer Stunde eine weitere Phasentrennung durchgeführt. Die Oberphase wurde wiederum verworfen. Die Unterphase wurde mit 400 g Toluol verdünnt und THF/Wasser unter Zugabe von weiterem Toluol ausdestilliert.

Das so erhaltene, noch saure Toluol-Sol wurde unter Rückfluss erhitzt und das zurückströmende Destilat über eine mit Natriumcarbonat gefüllte Säule geleitet. Nach sechs Stunden Rückfluss reagierte das Sol nicht mehr sauer.

Das erhaltene Toluolsol wurde bei 60°C im Vakuum von flüchtigen Anteilen befreit. Man erhielt ein weißes Pulver.

Durch Rühren mit einem Magnetrührer lassen sich 50 %ige Dispersionen dieses Pulvers in Methylmethacrylat (MMA) herstellen, die nur eine Viskosität von 18 mPas aufweisen, gut fließfähig und optisch klar sind.

Die Vorbehandlung der Kieselsäure mit Gamma-Methacryloxypropyltrimethoxysilan führt zu einer guten Verträglichkeit mit Methacrylaten wie MMA bei niedrigeren Dispersionszeiten.

Beispiel 8

Herstellung eines SiH funktionalisierten THF Sols 60 g Chlortrimethylsilan wurden in 1100 g THF vorgelegt und innerhalb von 45 Minuten 926 g Kieselsol (Levasil 200/40%, BET=200 m$^2$/g, 40 % $SiO_2$, $Na^+$ mit Ionentauscher entfernt) zudosiert. Nach einer Stunde hatten sich zwei Phasen gebildet, die im Scheidetrichter getrennt wurden. Die 895,1 g Unterphase wurden mit 55 g Chlordimethylsilan unter Rühren umgesetzt. Während der Reaktion war Gasentwicklung (Wasserstoff) zu beobachten. Es bildeten sich wiederum zwei Phasen, die in einem Scheidetrichter getrennt wurden. Die 729g Unterphase wurden mit insgesamt 400 g Toluol ausdestilliert. Das Reaktionsgemisch wurde über Soda unter Rückfluss erhitzt, bis das Kondensat neutral reagierte.

Das Produkt enthält 38,8 % Festkörper. Der SiH-Gehalt beträgt 0,4 mmol/g (Gasvolumetrisch bestimmt). Nach dem Trocknen im Vakuum ist der entstehende Feststoff leicht in Toluol redispergierbar.

Beispiel 9

Hydrosilylierung an den SiH-Gruppen 50,4g 1-Octen wurden mit 0,01g Hexachloroplatinsäure vorgelegt und auf 90°C geheizt. Dann wurden innerhalb von 10 Minuten 257 g Kieselsol aus Beispiel 8 zudosiert und 1h bei 100°C hydrosilyliert. Der SiH-Gehalt verminderte sich auf < 0,007 mmol/g, d.h. bei der Reaktion reagierten die SiH-Gruppen auf der Oberfläche der Partikel vollständig mit dem 1-Octen ab. Es enstand eine braune, klare Dispersion mit einem Feststoffgehalt von 33,6% und einer Teilchengröße von 26 nm bei einer Spanne von 0,6.

Auf gleiche Weise wurde die Hydrosilylierung mit Styrol, Undecylensäure, Allylalkohol, Allylglycidylether sowie Allylmethacrylat erfolgreich durchgeführt.

**Patentansprüche**

1. Verfahren zur Herstellung eines nanoskaligen Siliciumdioxids, mit den Schritten:

   a) zur Verfügung stellen einer wässrigen Suspension eines kolloidalen Siliciumdioxids mit einer mittleren Teilchengröße von 1 bis 500 nm;
   b) Reagierenlassen mit einem Organosilan oder Organosiloxan in einem aprotischen cyclischen Ether und Silanisierung des kolloidalen Siliciumdioxids;
   c) Abtrennung der wässrigen Phase der Reaktionsmischung von der organischen Phase;

d) nochmaliges Reagierenlassen der organischen Phase mit einem Organosilan oder Organosiloxan in einem aprotischen cyclischen Ether und Silanisierung des kolloidalen Siliciumdioxids;
e) Abtrennung der wässrigen Phase der Reaktionsmischung von der organischen Phase.

2. Verfahren nach Anspruch 1, **dadurch gekennzeichnet, dass** das in Schritt a) eingesetzte kolloidale Siliciumdioxid eine mittlere Teilchengröße von 2 bis 300 nm, vorzugsweise 3 bis 200 nm, weiter vorzugsweise 4 bis 150 nm, weiter vorzugsweise 4 bis 80 nm, weiter vorzugsweise 10 bis 40 nm aufweist.

3. Verfahren nach Anspruch 1 oder 2, **dadurch gekennzeichnet, dass** das nanoskalige Siliciumdioxid hydrophob ist.

4. Verfahren nach einem der Ansprüche 1 bis 3, **dadurch gekennzeichnet, dass** das nanoskalige Siliciumdioxid zu wenigstens 50%, vorzugsweise wenigstens 70%, weiter vorzugsweise wenigstens 80%, weiter vorzugsweise wenigstens 90% aus vereinzelten, nicht aggregierten oder agglomerierten Primärpartikeln besteht.

5. Verfahren nach einem der Ansprüche 1 bis 4, **dadurch gekennzeichnet, dass** der pH-Wert der in Schritt a) eingesetzten wässrigen Suspension eines kolloidalen Siliciumdioxids 5 oder weniger, vorzugsweise 4 oder weniger beträgt.

6. Verfahren nach einem der Ansprüche 1 bis 5, **dadurch gekennzeichnet, dass** der aprotische cyclische Ether Tetrahydrofuran (THF) ist.

7. Verfahren nach einem der Ansprüche 1 bis 6, **dadurch gekennzeichnet, dass** die Organosilane oder Organosiloxane ausgewählt sind aus der Gruppe bestehend aus Organosilanen der Formel $R^1{}_aH_bSiX_{4-a-b}$ und Organosiloxanen der Formel $R^1{}_nSiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen, jedes X unabhängig voneinander ausgewählt ist aus einem Halogenatom oder Alkoxyresten mit 1 bis 18 Kohlenstoffatomen, a = 0, 1, 2 oder 3, b = 0 oder 1, a+b = 1, 2 oder 3, unter der Voraussetzung, dass, wenn b = 1, dann a+b = 2 oder 3 und n eine ganze zahl von 2 bis einschließlich 3 ist.

8. Verfahren nach einem der Ansprüche 1 bis 7, **dadurch gekennzeichnet, dass** ein Halogensilan, vorzugsweise ein Chlorsilan verwendet wird.

9. Verfahren nach einem der Ansprüche 1 bis 8, **dadurch gekennzeichnet, dass** die Silanisierung in den Schritten b) und d) bei 0 bis 65°C, vorzugsweise 10 bis 65°C durchgeführt wird.

10. Verfahren nach einem der Ansprüche 1 bis 9, **dadurch gekennzeichnet, dass** die erste Silanisierung in Schritt b) bei einer niedrigeren Temperatur durchgeführt wird als die zweite Silanisierung in Schritt d).

11. Verfahren nach einem der Ansprüche 1 bis 10, **dadurch gekennzeichnet, dass** der in Schritt a) zur Verfügung gestellten wässrigen Suspension vor Durchführung des Schritts b) ein Alkoxysilan zugegeben wird.

12. Verfahren nach einem der Ansprüche 1 bis 11, **gekennzeichnet durch** den weiteren Schritt:

f) Austauschen des cyclischen Ethers gegen ein anderes aprotisches organisches Lösungsmittel

13. Verfahren nach Anspruch 12, **dadurch gekennzeichnet, dass** der cyclische Ether destillativ abgezogen wird.

14. Verfahren nach Anspruch 13, **dadurch gekennzeichnet, dass** im Anschluss an das destillative Abziehen des cyclischen Ethers unter Rückfluss erhitzt wird.

15. Verfahren nach Anspruch 14, **dadurch gekennzeichnet, dass** das rückfließende Lösungsmittel mit einer Base neutralisiert wird.

16. Verfahren nach Anspruch 15, **dadurch gekennzeichnet, dass** zur Neutralisation ein basisches Salz verwendet wird.

17. Verfahren nach Anspruch 16, **dadurch gekennzeichnet, dass** das basische Salz ein Alkali- oder Erdalkalicarbonat oder -hydrogencarbonat ist.

**18.** Verfahren nach einem der Ansprüche 12 bis 17, **dadurch gekennzeichnet, dass** das aprotische organische Lösungsmittel Toluol ist.

**19.** Verfahren nach einem der Ansprüche 1 bis 18, **dadurch gekennzeichnet, dass** das im zweiten Silanisierungschritt d) verwendete Silan oder Siloxan freie SiH-Gruppen aufweist, so dass nach dem zweiten Silanisierungsschritt freie SiH-Gruppen auf der Oberfläche der Siliciumdioxidpartikel vorhanden sind.

**20.** Verfahren nach Anspruch 19, **gekennzeichnet durch** den weiteren Schritt der Hydrosilylierung an den SiH-Gruppen.

**21.** Verfahren nach Anspruch 20, **dadurch gekennzeichnet, dass** die Hydrosilylierung mit einem Alken oder einer Allylverbindung durchgeführt wird.

**22.** Verfahren nach einem der Ansprüche 1 bis 21, **gekennzeichnet durch** den weiteren Schritt des Entfernens des cyclischen Ethers oder des in Schritt f) ausgetauschten anderen aprotischen organischen Lösungsmittels, so dass das nanoskalige Siliciumdioxid als redispergierbares Pulver zur Verfügung gestellt wird.

**23.** Redispergierbares, nanoskaliges Siliciumdioxidpulver, erhältlich durch ein Verfahren nach Anspruch 22.

**Figur 1**

**Figur 2**

**EP 2 025 722 A1**

**Europäisches Patentamt**

**EUROPÄISCHER RECHERCHENBERICHT**

Nummer der Anmeldung

EP 07 01 4926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | EP 0 982 268 A (DOW CORNING [US]) 1. März 2000 (2000-03-01) | 1-22 | INV. C09C1/36 |
| X | * Beispiele 1,2 * ----- | 23 | C09C1/30 |
| Y | WO 01/12730 A (PPG IND OHIO INC [US]; DOW CORNING [US]) 22. Februar 2001 (2001-02-22) * Seite 23, Zeile 28 - Seite 24, Zeile 10 * ----- | 1-22 | |
| Y | WO 01/12731 A (PPG IND OHIO INC [US]) 22. Februar 2001 (2001-02-22) * Seite 25, Zeile 12 - Zeile 27 * ----- | 1-22 | |
| Y | EP 0 900 829 A (DOW CORNING [US]) 10. März 1999 (1999-03-10) * Absatz [0009] * ----- | 1-22 | |

**RECHERCHIERTE SACHGEBIETE (IPC)**

C09C

Der vorliegende Recherchenbericht wurde für alle Patentansprüche erstellt

| Recherchenort | Abschlußdatum der Recherche | Prüfer |
|---|---|---|
| Den Haag | 17. Dezember 2007 | Siebel, Eric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 4926

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2007

| Im Recherchenbericht angeführtes Patentdokument | Datum der Veröffentlichung | Mitglied(er) der Patentfamilie | | Datum der Veröffentlichung |
|---|---|---|---|---|
| EP 0982268 A | 01-03-2000 | DE | 69906895 D1 | 22-05-2003 |
| | | DE | 69906895 T2 | 12-02-2004 |
| | | JP | 2000080201 A | 21-03-2000 |
| | | US | 6051672 A | 18-04-2000 |
| WO 0112730 A | 22-02-2001 | AU | 6785800 A | 13-03-2001 |
| | | CN | 1374987 A | 16-10-2002 |
| | | EP | 1208161 A1 | 29-05-2002 |
| | | JP | 2003507519 T | 25-02-2003 |
| | | US | 6736891 B1 | 18-05-2004 |
| WO 0112731 A | 22-02-2001 | AU | 6785900 A | 13-03-2001 |
| | | US | 2002107316 A1 | 08-08-2002 |
| EP 0900829 A | 10-03-1999 | DE | 69802483 D1 | 20-12-2001 |
| | | DE | 69802483 T2 | 27-06-2002 |
| | | JP | 11157825 A | 15-06-1999 |
| | | US | 5908660 A | 01-06-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982268 A